Europäisches Patentamt

European Patent Office

Office européen des brevets

(11) Veröffentlichungsnummer: **0 372 532**
**A1**

## (12) EUROPÄISCHE PATENTANMELDUNG

(21) Anmeldenummer: **89122508.8**

(22) Anmeldetag: **06.12.89**

(51) Int. Cl.⁵: **B61F 5/30, B61F 15/00**

(30) Priorität: **07.12.88 DE 3841153**

(43) Veröffentlichungstag der Anmeldung:
**13.06.90 Patentblatt 90/24**

(84) Benannte Vertragsstaaten:
**AT BE CH DE ES FR GB GR IT LI LU NL SE**

(71) Anmelder: **Waggon Union GmbH**

**D-5900 Siegen(DE)**

(72) Erfinder: **Ahlborn, Günter**
**Holunderweg 26**
**D-5900 Siegen 21(DE)**
Erfinder: **Büdenbender, Herbert**
**Feldwasserstrasse 1**
**D-5902 Netphen 2(DE)**
Erfinder: **Lohmann, Alfred, Dipl.-Ing.**
**Rinsdorfer Strasse 17**
**D-5900 Siegen-Eisern(DE)**

(74) Vertreter: **Eberhard, Friedrich, Dr.**
**Am Thyssenhaus 1**
**D-4300 Essen 1(DE)**

(54) **Anordnung der Achslager in einem Laufwerk für Schienenfahrzeuge.**

㉗ Die Erfindung betrifft die Anordnung der Achslager in einem Laufwerk für Schienenfahrzeuge, wobei jedes Achslager auf der Außenseite ein Gummi-Metall-Schalensegment mit einer äußeren und einer inneren Metallschale und einer Gummizwischenlage trägt und über dieses Schalensegment in der Seitenwange des Laufwerks gelagert ist.

Das Ziel der Erfindung bestand darin, eine Anordnung der Achslager für ein Laufwerk für Schienenfahrzeuge zu finden, wobei eine geforderte primäre vertikale Achsfederung mit einer geforderten horizontalen Längssteifigkeit der Achslagerung in einem einfachen und wirtschaftlichen Bauteil verbunden sein soll.

Gemäß der Erfindung wird dieses Ziel dadurch erreicht, daß die Gummizwischenlage (4b) oberhalb der Achsebene in Achsrichtung verlaufende Durchbrüche (6) aufweist und daß in die Gummizwischenlage des Schalensegments (4) von dessen Längsseiten aus beginnend koaxial metallische Teilsegmente (4d) eingebettet sind. Hierbei ist je ein Durchbruch (6) an Ende der Teilsegmente (4d) oder je ein Durchbruch (6) am Ende der Teilsegmente (4d) und mindestens ein Durchbruch (6) in der Gummizwischenlage (4b) oberhalb der Durchbrüche (6) am Ende der Teilsegmente (4d) angeordnet.

Fig.1

## Anordnung der Achslager in einem Laufwerk für Schienenfahrzeuge

Die Erfindung betrifft die Anordnung der Achslager in einem Laufwerk für Schienenfahrzeuge, wobei jedes Achslager auf der Außenseite ein Gummi-Metall-Schalensegment mit einer äußeren und einer inneren Metallschale und einer Gummizwischenlage trägt und über dieses Schalensegment in der Seitenwange des Laufwerks gelagert ist.

Es ist insbesondere bei Laufwerken für Eisenbahngüterwagen mit Rädern kleinen Durchmessers aus Gründen der Laufsicherheit bekannt, die Achslager fest in Einspannlager der Seitenwangen einzuspannen. Zur Erzielung der erforderlichen Laufeigenschaften für höhere Geschwindigkeiten müssen die Seitenwangen hierbei durch Querträger verbunden werden. Die dadurch entstehenden Bauungenauigkeiten und Verschiebungen der Seitenwangen gegeneinander führen bei fest eingespannten Achslagern zum Verspannen der Achslager und damit zu vorzeitigem Verschleiß.

Es ist nun bekannt, die außen koaxial runden Achslagergehäuse über einen Gummi-Metallring in die Seitenwangen einzuspannen. Hierdurch werden die Bauungenauigkeiten ausgeglichen und es entsteht neben der Körperschalldämmung eine gewisse Schwingungsdämpfung. Bei einer aus dem Stand der Technik vorbekannten Ausführung ist dieser Gummi-Metall ring lose eingelegt.

Es ist weiter aus dem Stand der Technik bekannt, anstelle des einen breiten Gummi-Metallringes zwei solcher Ringe mit Abstand zueinander anzuordnen.

Nachteilig bei diesen vorgenannten Ausführungen ist die fehlende Anpaßmöglichkeit der Gummi-Metallringe an unterschiedliche Federungsanforderungen in vertikaler und horizontaler Ebene.

Es ist weiter bekannt, den Gummi-Metallring etwa in Achsmitte horizontal zu teilen, wobei die obere Halbschale des Gummi-Metallringes mit härterem Gummi als die untere versehen ist. In Ausgestaltung dieser Konstruktion ist es durch die DE-PS 23 52 437 bekannt, die oberen und die unteren Halbschalen der Gummi-Metallringe auf den jeweils einander zugekehrten Seiten mit einer rechtwinklig zur Achslagermitte abgekröpften Schulter zu versehen, wobei das Achslagergehäuse zur Aufnahme der Schultern der Halbringe eine koaxial umlaufende Nut und die Einspannlager in den Seitenwangen des Drehgestells einen zwischen die Schultern der Halbringe eingreifenen Bund aufweisen und wobei die Achslagergehäuse über die Schultern der Halbschalen axial kraftschlüssig an den Seiten des Bundes anliegen.

Nachteilig bei dieser vorbekannten Ausführung ist ebenfalls die fehlende Anpassmöglichkeit der oberen Halbschale an die unterschiedlichen Federungsanforderungen in vertikaler und horizontaler Ebene.

Die Aufgabe vorliegender Erfindung bestand darin, eine Anordnung der Achslager für ein Laufwerk für Schienenfahrzeuge zu finden, wobei eine geforderte primäre vertikale Achsfederung mit einer geforderten horizontalen Längssteifigkeit der Achslagerung in einem einfachen und wirtschaftlichen Bauteil verbunden sein soll.

Gemäß der Erfindung wird diese Aufgabe dadurch gelöst, daß die Gummizwischenlage oberhalb der Achsebene in Achsrichtung verlaufende Durchbrüche aufweist und daß in die Gummizwischenlage des Schalensegments von dessen Längsseiten aus beginnend koaxial metallische Teilsegmente eingebettet sind. Hierbei ist je ein Durchbruch am Ende der Teilsegmente oder je ein Durchbruch am Ende der Teilsegmente und mindestens ein Durchbruch in der Gummizwischenlage oberhalb der Durchbrüche am Ende der Teilsegmente angeordnet. Jedes Teilsegment ist gemäß einer zweckmäßigen Ausgestaltung der Erfindung von den Längsseiten des Schalensegments aus bis etwa 45° zur Schalensegment-Längsmitte ragend ausgebildet.

Durch die Erfindung wird ermöglicht, in einem einfachen Bauteil eine weiche vertikale Primärfederung mit einer horizontal längssteifen Anlenkung der Achse zu verbinden. Das Bauteil ist wirtschaftlich herstellbar und in der Montage mit geringem Aufwand einsetzbar. Die Auf nahme des Achslagers in der Seitenwange kann ebenfalls einfach gestaltet werden.

In einer zweckmäßigen Ausgestaltung der Erfindung sind an der äußeren und/oder der inneren Metallschale auf deren Außenseiten Sicherungsnokken angeordnet. Diese Sicherungsnocken arretieren das Gummi-Metall-Schalensegment in der Seitenwange.

Einzelheiten der Erfindung sind anhand der Zeichnung in einem Ausführungsbeispiel erläutert.

Es zeigen

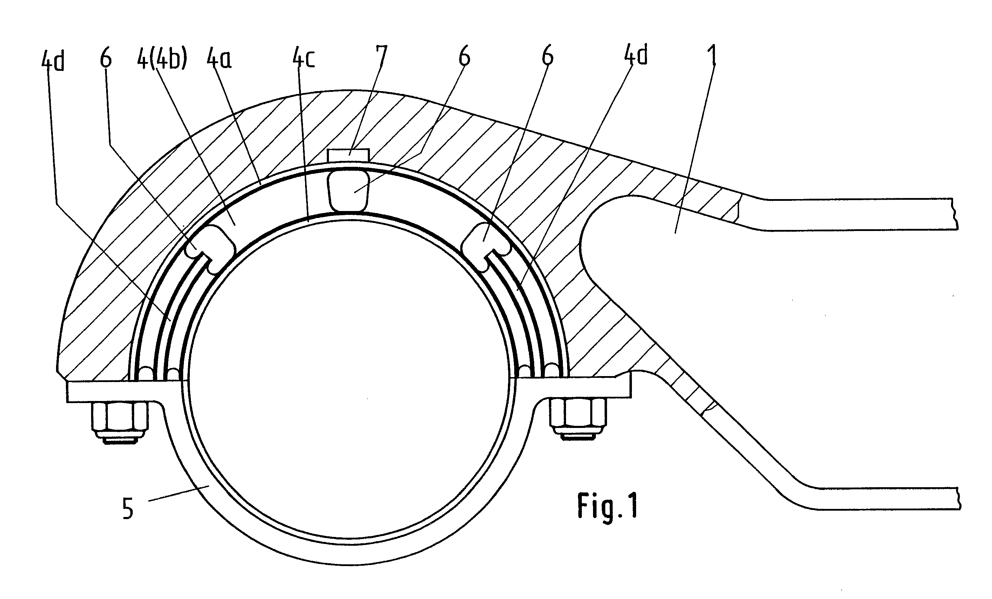

Fig. 1 die Anordnung eines Achslagers in einem Laufwerk gemäß der Erfindung in vertikalem Längsschnitt, schematisch dargestellt,

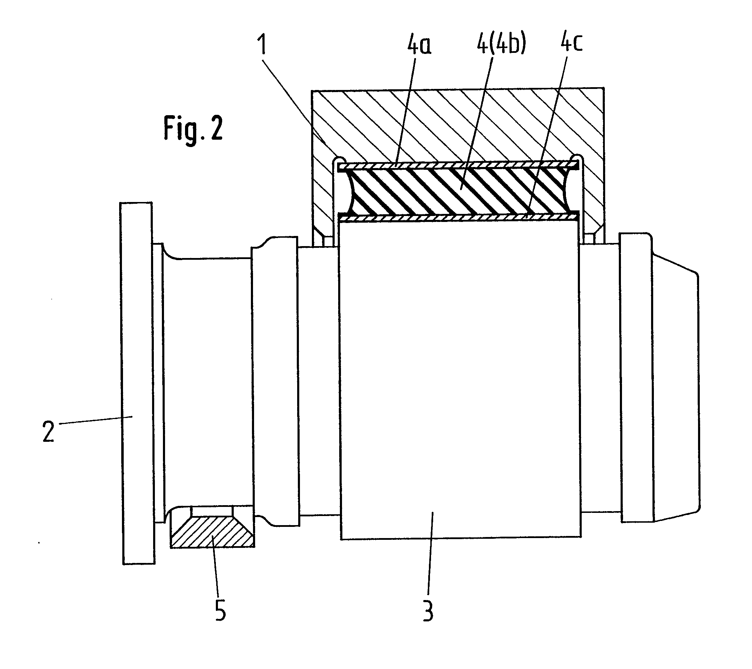

Fig. 2 einen vertikalen Querschnitt durch die Anordnung nach Fig. 1,

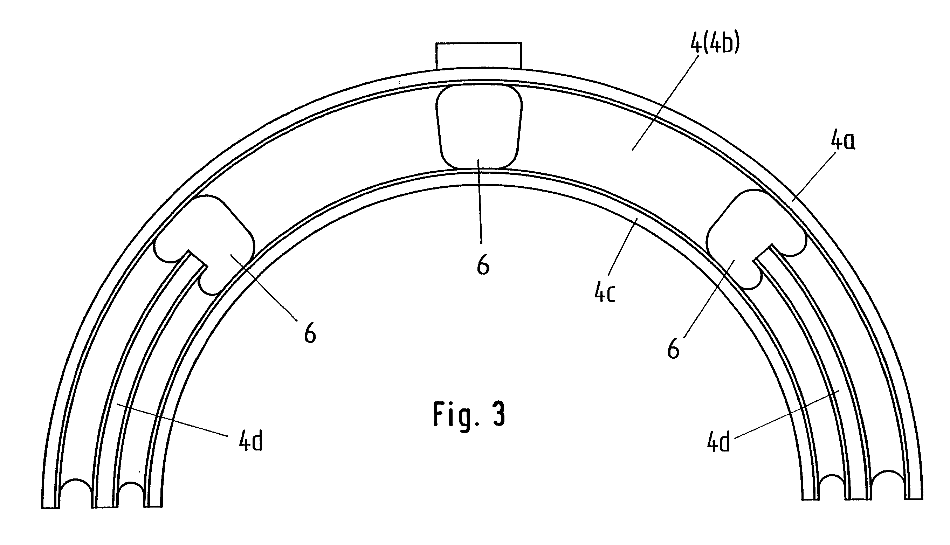

Fig. 3 einen Ausschnitt aus Fig. 1 in vergrößerter Darstellung.

In die Seitenwange 1 des Laufwerks ist jede Achse 2 über Achslager 3 und ein Gummi-Metall-Schalensegment 4 eingespannt. In dem in der Zeichnung dargestellten Ausführungsbeispiel der Erfindung umfaßt das Schalensegment 4 die obere Hälfte des Mantels des auf seiner Außenseite koaxial runden Achslagergehäuses 3. In weiteren, nicht dargestellten Ausführungsbeispielen der Erfindung kann das Schalensegment 4 auch mehrteilig ausgeführt sein. Ein mit der Seitenwange 1 verspannter Achshalterschlüssel 5 umgreift von unten das Achslager 3 oder die Achse 2 mit Spiel und sichert die Achse 2 gegen Ausheben. In einem weiteren, nicht dargestellten Ausführungsbeispiel der Erfindung kann das Gummi-Metall-Schalensegment auch unter Zwischenschaltung eines nicht dargestellten Adapters in der Seitenwange 1 gelagert sein. Es ist weiter denkbar, daß gemäß einem weiteren, ebenfalls nicht dargestellten Ausführungsbeispiel der Erfindung, das Gummi-Metall-Schalensegment 4 den Mantel des Achslagergehäuses 3 nicht hälftig, sondern in einem kleineren Teilbereich umfaßt. Das Gummi-Metall-Schalensegment besteht aus einer äußeren Metallschale 4a, einer Gummizwischenlage 4b und einer inneren Metallschale 4c. In der Gummizwischenlage 4b sind in Achs richtung verlaufend Durchbrüche 6 angeordnet. In dem in der Zeichnung dargestellten Ausführungsbeispiel der Erfindung befindet sich dabei ein Durchbruch vertikal oberhalb der Achsmitte und jeweils ein Durchbruch 6 beidseitig der Achsmitte im Winkel von ca. 45° zur Schalensegment-Längsmitte. In weiteren, nicht dargestellten Ausführungsbeispielen der Erfindung kann anstelle des einen, oberhalb der Achsmitte verlaufenden Durchbruchs 6 mehrere Durchbrüche 6 oder auch kein Durchbruch im oberen Bereich der Gummizwischenlage 4b angeordnet sein. Von den Längsseiten des Gummi-Metall-Schalensegments 4 aus sind in die Gummizwischenlage 4b koaxial zwischen der äußeren und der inneren Metallschale 4a und 4c koaxial verlaufend metallische Teilsegmente 4d eingebettet. Diese metallischen Teilsegmente 4d verlaufen bis zu einem Winkel von ca. 45° zur Schalensegment-Längsmitte bis in den ersten seitlichen Durchbruch 6. Die Lage der seitlichen Durchbrüche 6 sowie die Bogenlänge der Teilsegmente 4d ist in jedem Ausführungsbeispiel der Erfindung so gewählt, daß das Gummi-Metall-Schalensegment bei vertikaler Belastung eine im wesentlichen durch die Druckfestigkeit des oberen Bereiches der Gummizwischenlage 4b begrenzte Einfederung erfährt und die horizontale Längsführung der Achse 2 durch die Einfederung der seitlichen, von den Teilsegmenten 4d begrenzten Bereiches der Gummizwischenlage 4b erfolgt. Sicherungsnocken 7 arretieren das Schalensegment 4 in der Seitenwange 1.

## Ansprüche

1. Anordnung der Achslager in einem Laufwerk für Schienenfahrzeuge, wobei jedes Achslager auf der Außenseite ein Gummi-Metall-Schalensegment mit einer äußeren und einer inneren Metallschale und einer Gummizwischenlage trägt und über dieses Schalensegment in der Seitenwange des Laufwerks gelagert ist, **dadurch gekennzeichnet, daß** die Gummizwischenlage (4b) in Achsrichtung verlaufende Durchbrüche (6) aufweist und daß in die Gummizwischenlage (4b) des Schalensegments (4) von den Längsseiten aus beginnend metallische Teilsegmente (4d) eingebettet sind.

2. Anordnung nach Anspruch 1, **dadurch gekennzeichnet, daß** je ein Durchbruch (6) am Ende der Teilsegmente (4d) angeordnet ist.

3. Anordnung nach den Ansprüchen 1 und 2, **dadurch gekennzeichnet, daß** je ein Durchbruch (6) am Ende der Teilsegmente (4d) und mindestens ein Durchbruch (6) in der Gummizwischenlage (4b) oberhalb der Durchbrüche am Ende der Teilsegmente angeordnet ist.

4. Anordnung nach den Ansprüchen 1 bis 3, **dadurch gekennzeichnet, daß** jedes Teilsegment (4d) von den Längsseiten des Schalensegmentes (4) aus bis etwa 45° zur Schalensegment-Längsmitte ragend ausgebildet ist.

5. Anordnung nach den Ansprüchen 1 bis 4, **dadurch gekennzeichnet, daß** die äußere und/oder die innere Metallschale (4a bzw. 4c) auf ihrer Außenseite Sicherungsnocken (7) tragen.

Fig.1

Fig. 2

Fig. 3

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5 ) |
|---|---|---|---|
| X | DE-B-1210450 (WAGGONFABRIK UERDINGEN AG)<br>* Spalte 1, Zeile 30 - Spalte 1, Zeile 38 *<br>* Spalte 3, Zeile 14 - Spalte 3, Zeile 44;<br>Figuren 1, 2 * | 1 | B61F5/30<br>B61F15/00 |
| A | | 2-4 | |
| | ---- | | |
| A | FR-A-2511961 (THE BUDD COMPANY)<br>* Anspruch 1; Figuren 1-6 * | 1 | |
| | ----- | | |

**RECHERCHIERTE SACHGEBIETE (Int. Cl.5 )**

B61F

Der vorliegende Recherchenbericht wurde für alle Patentansprüche erstellt

| Recherchenort | Abschlußdatum der Recherche | Prüfer |
|---|---|---|
| DEN HAAG | 14 MAERZ 1990 | CHLOSTA P. |

EPO FORM 1503 03.82 (P0403)